# EUROPÄISCHE PATENTSCHRIFT

(11) **EP 0 499 663 B1**
(45) Veröffentlichungstag und Bekanntmachung des Hinweises auf die Patenterteilung: **03.01.1996**
(21) Anmeldenummer: 91102380.2
(22) Anmeldetag: 20.02.1991
(51) Int. Cl.: B60P 1/44

(54) **Ladevorrichtung für Lastfahrzeuge**
Loading device for lorries
Mécanisme de chargement pour camions

(43) Veröffentlichungstag der Anmeldung: 26.08.1992
(73) Patentinhaber: PLM- PAULMICHL FAHRZEUG- UND ANLAGENBAU, D-88299 Leutkirch (DE)
(72) Erfinder: Paulmichl, Dieter, W-7970 Leutkirch 4 - Gebrazhofen (DE)
(74) Vertreter: Riebling, Peter, Dr.-Ing., Patentanwalt

(56) Entgegenhaltungen:
- DE-B- 1 250 748
- DE-B- 1 950 652
- GB-A- 2 121 375

## Beschreibung

Die Erfindung betrifft eine Ladevorrichtung für Lastfahrzeuge oder feststehende Laderampen mit einer Ladeplattform, die mittels einem Schwenkantrieb aus der Ruhestellung in eine Ladestellung verschwenkbar ist nach dem Oberbegriff des Patentanspruchs 1.

Eine derartige Ladevorrichtung, insbesondere für Lastfahrzeuge, ist bereits aus der DE-A-12 50 748 bekannt, wo ebenfalls eine Ladeplattform aus einer vertikalen Ruhestellung in eine horizontale Ebene verschwenkt wird, um den Lade- bzw. Entladevorgang durchführen zu können.

Die Ladevorrichtung nach der DE-A-12 50 748 ist in Längsrichtung der Ladefläche verfahrbaar angeordnet, wobei jedoch in relativ konstruktiv aufwendiger Durchführung eine Schienenanordndung an die Ladefläche angebracht wird, wo an einer unteren und oberen Schiene die Ladevorrichtung entlangläuft.

Bei der bekannten Ladevorrichtung ist es weiterhin nachteilig, daß die Schienenanordnungen über die Ladeplattform die gesamte Last beim Lade- und Entladevorgang aufnehmen muß, insbesondere weil ein gleichzeitiges Abstützen am Untergrund nicht vorgesehen ist. Die bekannte Ladevorrichtung weist eine Ladeplattform auf, die über Längsstreben gehalten wird und von Hand aus ein- oder ausgeklappt wird, was oftmals nachteilig erscheint.

Bei der bekannten Ladevorrichtung nach der DE-A-12 50 748 sind weiterhin zum Inneren der Ladefläche im oberen Raum Verstrebungen ausgebildet und weiterhin bildet die eingeklappte Ladeplattform in Verbindung mit Verstrebungen zwischen der Schienenanordnung einen relativ großen Raum aus, wodurch insbesondere in seitlicher Richtung viel Platz für die Ladevorrichtung benötigt wird.

Aufgabe der vorliegenden Erfindung ist es deshalb, eine Ladevorrichtung für Lastfahrzeuge oder feststehende Laderampen der eingangs genannten Art so weiterzubilden, daß bei relativ einfacher konstruktiver Ausgestaltung eine betriebssichere Ladevorrichtung auch für größere Lasten geschaffen wird, ohne daß dabei eine aufwendige Konstruktion oder viel Platz an der Ladefläche benötigt wird.

Zur Lösung der Aufgabe sind die Merkmale des kennzeichnenden Teils des Patentanspruchs 1 vorgesehen.

Das Wesen der Erfindung liegt darin, daß zunächst die Ladeplattform beim Lade- bzw. Entladevorgang am Untergrund über ein Untergestell abgestützt wird, und daß weiterhin die Ladeplattform einschließlich des Untergestells und Verbindungsteilen nach Art einem Faltvorgang an die Ladefläche eingeschwenkt bzw. eingeklappt oder von dieser auf den Untergrund ausgeschwenkt wird. In der Ladestellung liegt demnach die Ladeplattform nicht auf dem Untergrund auf, sondern stützt sich vielmehr an einem Untergestell ab, welches auf dem Untergrund mit verfahrbaren Rollen aufliegt. Von diesem Untergestell aus, mit Abstützung am Boden bzw. am Untergrund, wird die Ladeplattform über eine Hubvorrichtung abgesenkt bzw. abgehoben, bis die Ladefläche für einen Ladevorgang erreicht ist.

Ist der Entladevorgang beendet so werden das Untergestell und die Ladeplattform an Verbindungsteilen zusammengefaltet und schließlich, einschließlich der Verbindungsteile in stets paralleler Anordnung zueinander, verschwenkt, bis die Ruhestellung erreicht ist.

Die Ruhestellung ist entweder eine vertikale Ausrichtung von Ladeplattform und Untergestell einschließlich der Verbindungsteile nach Art einer Bordwand, oder auch ein Abschwenkvorgang unter die Ladefläche bzw. ein Aufschwenken auf die Ladefläche selbst, so daß die einzelnen Teile der Ladevorrichtung entweder vertikal oder in planer Anordnung auf der Ladefläche oder unter der Ladefläche angeordnet sind.

In vorteilhafter Ausgestaltung ist es vorgesehen, daß die Verbindungsteile entlang der Lagerwelle, entlang der Ladefläche verfahrbar sind, wobei gleichzeitig die Ladeplattform und das Untergestell in Längsrichtung an der Entladefläche verschoben werden.

Bei dieser Ausgestaltung ist es demnach möglich, die Ladeplattform einschließlich des Untergestells nach belieben entlang der Ladefläche zu verfahren, um in dieser Weise Lasten an beliebigen Orten aufnehmen bzw. absetzen zu können.

Die Verstellbarkeit bzw. Verfahrbarkeit der Ladeplattform längs der Lade- oder Entladefläche hat auch den Vorteil, daß in besonderen Fällen die Ladeplattform auch als Transportmittel längs der Ladefläche verwendbar ist.

Eine weitere vorteilhafte Ausgestaltung sieht vor, daß der Verschiebeantrieb im Untergestell angeordnet ist und über angetriebene auf der Fahrbahn aufliegende Stützrollen wirksam ist.

Die Verschiebung der Ladeplattform längs der Entladefläche kann aber auch in der Art verwirklicht werden, daß zwischen der Ladeplattform und der Entladefläche selbst der Verschiebeantrieb angeordnet ist.

Mit einem Verschiebeantrieb mit auf dem Untergrund aufliegenden Stützrollen, wobei das Untergestell einschließlich der abgestützten Plattform und den Verbindungsteilen verschoben werden, ergibt sich jedoch eine einfache Lösung des Verschiebungsantriebes. In dieser Art kann die Ladeplattform auch mit aufliegenden Lasten, ohne die Lagerwelle an der Entladefläche zu belasten, auf dem Untergrund verschoben werden.

Als vorteilhaft wird weiterhin vorgeschlagen, daß die Verbindungsteile in der Länge veränderbar ausgestaltet sind.

Die längenveränderlichen Verbindungsteile haben dabei die Aufgabe, die Lage der Plattform in der untersten Stellung bzw. die Lage des Untergestells den jeweils örtlichen Gegebenheiten anzupassen. Die Auflagefläche des Untergestells kann in dieser Weise exakt abgestützt werden, z. B. auf dem Untergrund an einem Gehsteig oder auf mehr oder weniger hohen Rampen. Mit der Abstützung des Untergestells am Boden oder dergleichen über die längenveränderlichen Verbindungsteile wird insbesondere erreicht, daß auch große Lasten mittels der Plattform geladen bzw. entladen werden können, da eine feste Abstützung bzw. Verankerung ohne Belastung der Lagerwelle oder des Schwenkantriebes erreicht wird.

Die Erfindung sieht weiterhin vorteilhaft vor, daß das Untergestell, die Ladeplattform und die Verbindungsteile unter die Ladefläche einschwenkbar sind.

Bei dieser Ausgestaltung werden die einzelnen Verbindungs- und sonstigen plattenförmigen Teile der Ladevorrichtung unter die Ladefläche eingeschwenkt, so daß, eventuell für einen Transportbetrieb, die Ladevorrichtung ohne störend zu wirken, völlig weggeklappt wird.

Eine weitere vorteilhafte Ausgestaltung sieht vor, daß das Untergestell, die Ladeplattform und die Verbindungsteile um ca. 180° hoch schwenkbar sind, um einen Teil der Bordwand der Ladefläche zu bilden.

Bei dieser Ausgestaltung stellt die Ladevorrichtung in zusammengefaltetem Zustand selbst einen Teil der Bordwand dar und nimmt in dieser Ruhestellung besonders wenig Platz ein.

Vorteilhaft sind die an der Lagerwelle verschiebbaren Verbindungsteile mit einem Schwenkantrieb gekoppelt, wobei die Verbindungsteile mit dem Untergestell und der Ladeplattform verschwenkt werden.

Hierbei ist etwa unterhalb der Ladefläche ein Schwenkantrieb ausgebildet, welcher mit der Lagerwelle gekoppelt ist, wodurch in konstruktiv einfacher Ausgestaltung die Teile der Ladevorrichtung in die Ruhgestellung eingeschwenkt bzw. von dieser ausgeschwenkt werden.

Eine weitere Ausgestaltung sieht vor, daß die Lagerwelle und die Verbindungsteile unterhalb der Ladefläche und innerhalb der herabgeklappten Bordwand angeordnet bzw. beweglich sind.

Auch bei dieser Ausgestaltung wird bei paralleler Anordnung der einzelnen Teile der Ladevorrichtung sehr wenig Platz beansprucht, wobei sogar eine weitgehende Integration der ein- und ausschwenkbaren Teile der Ladevorrichtung in einer Bordwand eines Kraftfahrzeuges stattfinden kann.

Diese und weitere vorteilhafte Merkmale der erfindungsgemäßen Ladevorrichtung ergeben sich aus dem Ausführungsbeispiel der Erfindung, das schematisch in der Zeichnung dargestellt ist.

Es zeigen:
- Figur 1:: eine Draufsicht, teilweise im Schnitt auf ein Lastfahrzeug mit einer erfindungsgemäßen Ladevorrichtung, die sich in der Ladestellung befindet;
- Figur 2:: eine Seitenansicht einer erfindungsgemäßen Ladevorrichtung in der angehobenen Stellung der Ladeplattform;
- Figur 3 und 4:: Einzelheiten der erfindungsgemäßen Ladevorrichtung;
- Figur 5:: eine Ansicht eines Lastfahrzeuges gegen die Fahrtrichtung mit einer erfindungsgemäßen Ladevorrichtung in der Transportstellung;
- Figur 6:: eine Teildarstellung ähnlich derjenigen nach der Figur 5 mit herabgeklappter Ladevorrichtung;
- Figur 7:: eine Teildarstellung ähnlich derjenigen nach den Figuren 5 und 6 mit der Ladevorrichtung in der Beladestellung und
- Figur 8:: eine Teildarstellung der Ladevorrichtung ähnlich derjenigen nach den Figuren 5 bis 8, und zwar in der angehobenen Stellung der Ladeplattform.

Die erfindungsgemäße Ladevorrichtung 11 wird in Ländern mit Rechtsverkehr im allgemeinen an der rechten Seite eines Fahrzeuges 12 anzuordnen sein, und zwar derart, daß sich die Ladevorrichtung in der Transportstellung am vorderen Ende der Ladefläche 2 befindet. In besonderen Fällen kann aber auch die Ladevorrichtung auf der linken Seite oder auch an beiden Seiten vorgesehen werden. In Sonderfällen empfiehlt es sich auch, die Ladevorrichtung etwa in der Fahrzeugmitte oder auch am rückwärtigen Fahrzeugende vorzusehen.

Die Ladefläche 2 besitzt im Bereich der Ladevorrichtung 11 eine Ausnehmung 13, in die im hochgeklappten Zustand die Ladevorrichtung hineinklappt, um in der Transportstellung einen Teil der Bordwand 9 zu bilden.

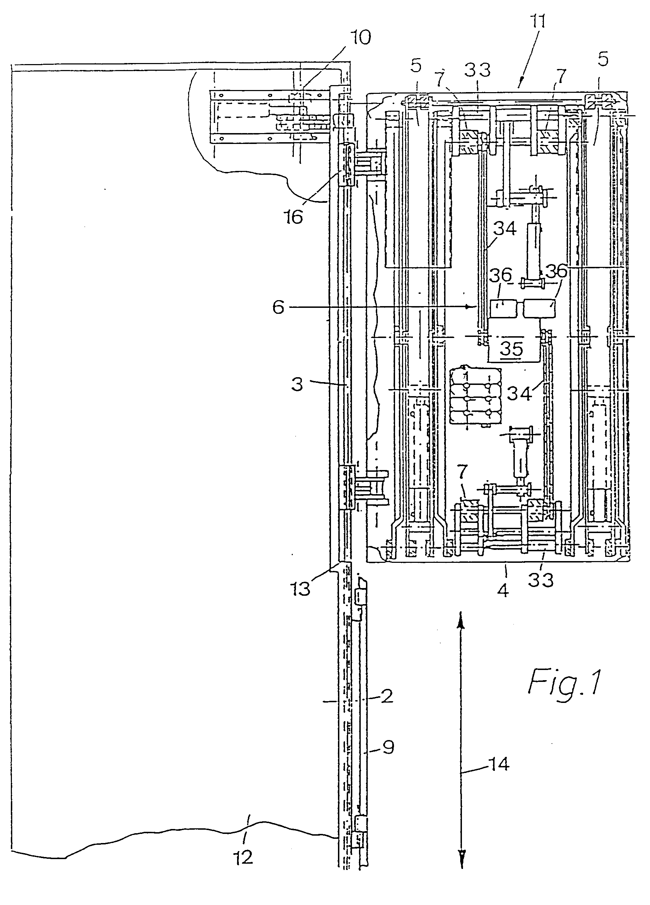

Die Ladevorrichtung ist, wie nachstehend noch näher dargelegt wird, in Richtung des Doppelpfeiles 14 der Darstellung der Figur 1 längs der Ladefläche 2 verschiebbar. Die Ladevorrichtung kann also längs der ganzen Ladefläche bewegt werden. Dies schließt nicht aus, in Sonderfällen die Beweglichkeit der Ladevorrichtung zu verringern.

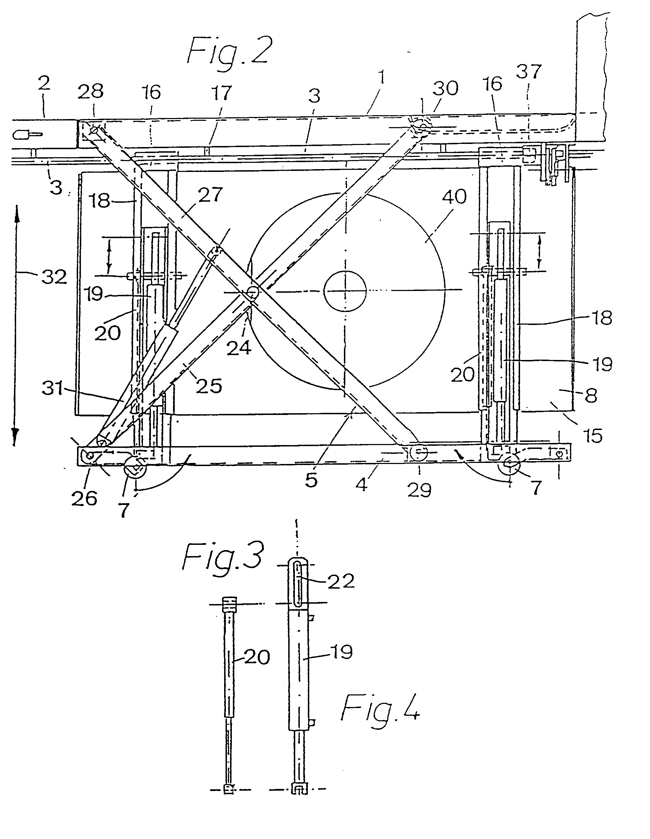

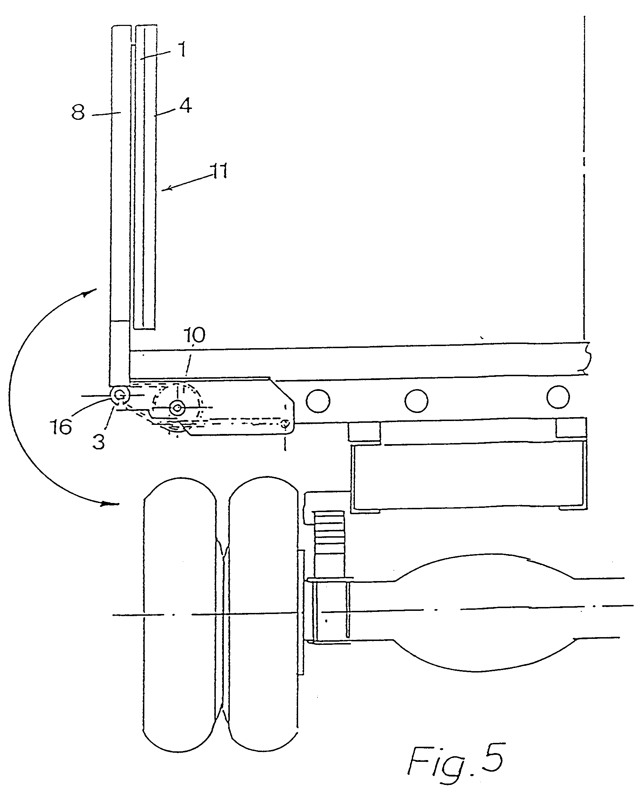

Die Ladevorrichtung besteht im wesentlichen, wie dies insbesondere aus den Darstellungen der Figuren 5 bis 8 hervorgeht, aus den Verbindungsteilen 8, dem Untergestell 4 und der Ladeplattform 1. Zwischen dem Untergestell 4 und der Ladeplattform 1 ist die Hubvorrichtung 5 vorgesehen, wie diese insbesondere aus der Darstellung der Figur 2 hervorgeht.

Die Verbindungsteile 8 umfassen, wie aus Figur 2 zu entnehmen ist, eine Platte 15, die mittels geschlitzter Büchsen 16 an der Lagerwelle 3 gehalten ist Diese Lagerwelle 3 ist beispielsweise eine Welle von etwa 25 mm Durchmesser, die sich längs der Ladefläche 2 erstreckt. Die Büchsen 16 sind dabei geschlitzt, um trotz der Befestigungsstifte 17, mit denen die Lagerwelle 3 an der Ladefläche 3 gehalten ist, eine Beweglichkeit der Verbindungsteile längs der Ladefläche zu erhalten.

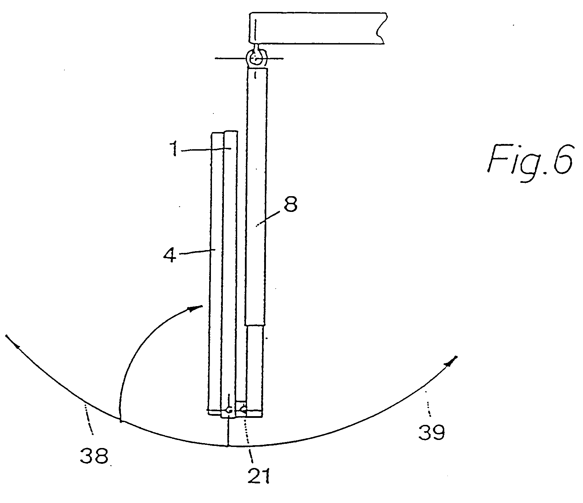

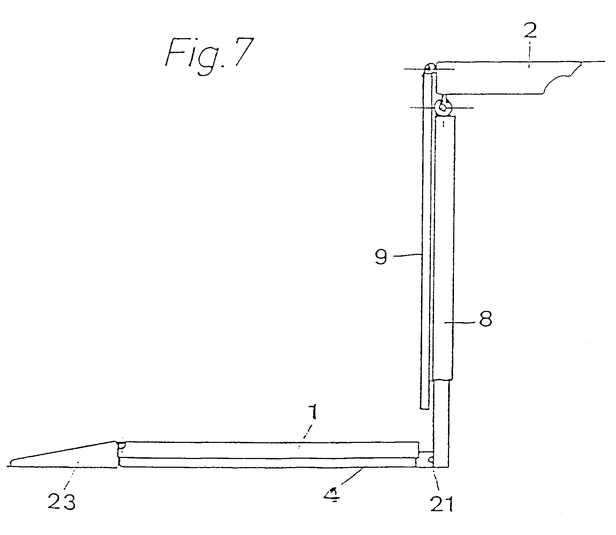

Die beiden Halteelemente 18 der Verbindungsteile 8, die an ihren in der Darstellung der Figur 2 oberen Enden die Büchsen 16 tragen, nehmen ferner je einen Hydraulikzylinder 19 und eine Gasfeder 20 auf. Die Hydraulikzylinder 19 dienen dabei zur Schwenkbewegung des Untergestells 4 um die Achse 21 der Halteelemente 18, um beispielsweise aus der Stellung der Figur 6 in diejenige der Figur 7 und umgekehr zu gelangen. Die Achse 21 ist dabei bezüglich der Hauptteile er Verbindungsteile 8 beweglich, um die Höhenlage des Untergestells 4 dem jeweils gegebenen Niveau der Fahrbahn, eines Gehsteiges, einer Rampe oder dergleichen anpassen zu können. Dieser Anpassung dient die Langlochanordnung 22 am Hydraulikzylinder 19. Die richtige Höhenlage des Untergestells 4 ergibt sich durch die Auflage auf der Fahrbahn.

In der Stellung der Figur 7 befindet sich die Ladeplattform 1 in der Beladestellung. Ein hochklappbarer Auffahrkeil 23 erleichtert das Aufbringen der Lasten auf die Ladeplattform 1. Die vertikalen Abmessungen der Ladeplattform 1 und des Untergestells 4 betragen in der abgesenkten Stellung der Ladeplattform, wie diese in der Figur 7 dargestellt ist, bei einem bevorzugten Ausführungsbeispiel der Erfindung nur etwa 90 mm.

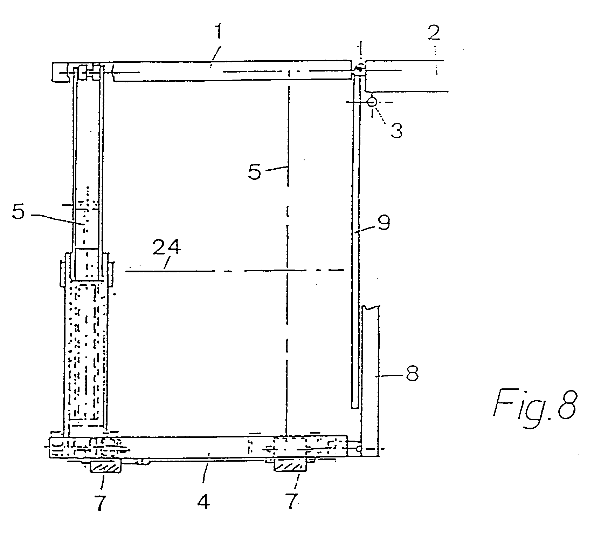

Zum Anheben der Ladeplattform 1 aus der abgesenkten Stellung der Figur 7 in die angehobene Stellung gemäß Figur 2 oder auch Figur 8 erfolgt durch zwei parallel zueinander ausgerichtete Hubvorrichtungen 5, die scherenartig gestaltet sind. Das Scherengelenk ist mit 24 bezeichnet. Das eine Scherenglied 25 ist bei 26 am Untergestell 4 gelagert und das andere Scherenglied 27 bei 28 an der Ladeplattform 1. Die anderen Ende 29 und 30 der Scherenglieder 25 und 27 bewegen sich in horizontalen Führungen des Untergestells 4 bzw. der Ladeplattform 1. Der Hydraulikzylinder, der die Hubvorrichtung antreibt, ist mit 31 bezeichnet. Die scherenartigen Hubvorrichtungen 5 bewegen somit die Ladeplattform 1 in Richtung des Doppelpfeiles 32 der Darstellung der Figur 2 aus einer unteren Beladestellung gemäß Figur 7 in eine angehobene Stellung gemäß Figur 8. Diese angehobene Stellung befindet sich im wesentlichen auf dem Niveau der Ladefläche 2 des Lastfahrzeuges.

Um beliebige Stellen der Ladefläche erreichen zu können, kann die ganze Ladevorrichtung 11 in Richtung des Doppelpfeiles 14 (Figur 1) bewegt werden. Diesem Zweck dienen bei Bedarf nach unten ausfahrbare Stützrollen 7 im Untergestell 4. Diese Stützrollen 7 sind je um das Gelenk 33 verschwenkbar und damit absenkbar. Der Antrieb der Stützrollen erfolgt über die Ketten 34 vom Getriebe 35 mittels der Hydraulikmotoren 36. Ist der Verschiebungsantrieb 6 eingeschaltet, gleiten die Büchesen 16 auf der Lagerwelle 3 und bringen die Ladevorrichtung in die gewünschte Stellung. Die herabgelassene Ladebordwand stört dabei nicht, da sich die Lagerwelle unterhalb der Ladefläche und innerhalb dieser Ladebordwand befindet. Die Trommel 40 dient der Aufnahme der hydraulischen Schlauchleitung zur Energieversorgung der Einrichtungen der Ladevorrichtung, insbesondere im Untergestell 4.

Das Hochschwenken der Ladevorrichtung ist bei dem gezeigten Ausführungsbeispiel in der Stellung der Figur 1 möglich. Die Anordnung ist dabei derart getroffen, daß die vordere Büchse 16 an einem Teil ihres Außenumfangs einen Sechskant 37 besitzt, der in eine angepaßte Ausnehmung eines Antriebes eingreift, der in der Lage ist, die Büchsen 16 und damit die Verbindungsteile und die zugehörigen Teile um die Mittelachse der Lagerwelle 3 zu verschwenken. Dieser Schwenkantrieb 10 ist unter dem vorderen Ende der Ladefläche angeordnet, wie dies aus der Figur 1 hervorgeht.

Bevor dieser Schwenkantrieb betätigt wird, ist aus der Stellung der Figur 7 die Stellung der Figur 6 anzustreben, d.h. der Keil 23 ist abzunehmen oder einzuklappen und das Untergestell 4 mit der Ladeplattform 1 in der abgesenkten Stellung ist um die Achse 21 hochzuschwenken, bis die Stellung der Figur 6 erreicht ist. Der Schwenkantrieb bewegt dann die ganze Ladevorrichtung in Richtung des Pfeiles 38, um die Ladevorrichtung in die Stellung der Figur 5 zu bringen.

Bei einer Variante der Erfindung kann aber auch aus der Stellung der Figur 6 in Richtung des Pfeiles 39 verschwenkt werden, nämlich dann, wenn beispielsweise bei Wechselaufbauten die Ausbildung der Ladefläche nicht der erfindungsgemäßen Ladevorrichtung angepaßt ist. Für diese Fälle kann vorgesehen werden, die Ladevorrichtung unter die Ladefläche in Richtung des Pfeiles 39 einzuschwenken.

## Patentansprüche

1. Ladevorrichtung für Lastfahrzeuge oder feststehende Laderampen mit einer Ladeplattform (1), die mittels einem Schwenkantrieb aus der Ruhestellung in eine Ladestellung verschwenkbar ist, wobei die Ladeplattform aus einer Ruhestellung an der Entladefläche in die Ladestellung parallel zum Untergrund verschwenkt wird,
**dadurch gekennzeichnet**, daß in Ruhestellung in eingeschwenktem Zustand die Ladeplattform (1) in Verbindung mit einem Untergestell (4) an Verbindungsteilen (8) parallel zu den Teilen (4,8) angeordnet ist, und daß beim Ausschwenken in die Ladestellung zunächst die Verbindungsteile (8) einschließlich Ladeplattform (1) und Untergestell (4) an einer Lagerwelle (3) verschwenkt werden und im weiteren das Untergestell (4) mit der Ladeplattform (1) von den Verbindungsteilen (8) um eine Drehachse (21), welche parallel zur lagerwelle (3) verläuft, auf den Untergrund ausgeschwenkt wird, wobei sich die Ladeplattform (1) heb- und senkbar mittels einer scherenartigen Hubvorrichtung (5) von dem Untergestell (4) abstützt.

2. Ladevorrichtung nach Anspruch 1, **dadurch gekennzeichnet**. daß die Verbindungsteile (8) entlang der Lagerwelle (3) in Fahrtrichtung über einen Verschiebeantrieb (6) verfahrbar angeordnet sind, wobei gleichzeitig die Ladeplattform (1) und das Untergestell (4) in Längsrichtung an der Entladefläche verschoben werden.

3. Ladevorrichtung nach den Ansprüchen 1 und 2, **dadurch gekennzeichnet**, daß der Verschiebeantrieb (6) im Untergestell (4) angeordnet ist und, über angetriebene, auf der Fahrbahn aufliegende Stützrollen (17) wirksam ist.

4. Ladevorrichtung nach Anspruch 1, **dadurch gekennzeichnet**, daß die Verbindungsteile (8) in der Länge veränderbar ausgestaltet sind.

5. Ladevorrichtung nach Anspruch 1, **dadurch gekennzeichnet**, daß das Untergestell (4), die Ladeplattform (1) und die Verbindungsteile (8) unter die Ladefläche (2) einschwenkbar ist.

6. Ladevorrichtung nach Anspruch 1, **dadurch gekennzeichnet**, daß das Untergestell (4), die Ladeplattform (1) und die Verbindungsteile (8) um ca. 180° hochschwenkbar sind, um einen Teil der Bordwand (9) der Ladefläche (2) zu bilden.

7. Ladevorrichtung nach Anspruch 1, **dadurch gekennzeichnet**, daß die an der Lagerwelle (3) verschiebbaren Verbindungsteile (8) mit einem Schwenkantrieb (10) gekoppelt sind, wobei die Verbindungsteile (8) mit dem Untergestell (4) und der Ladeplattform (1) verschwenkt werden.

8. Ladevorrichtung nach einem oder mehreren der vorgehenden Ansprüche, **dadurch gekennzeichnet**, daß die Lagerwelle (3) und die Verbindungsteile (8) unterhalb der Ladefläche (2) und innerhalb der herabgeklappten Bordwand (9) angeordnet bzw. beweglich sind.

## Claims

1. A loading device for freight vehicles or fixed loading ramps with a loading platform (1), which is able to be swivelled by means of a swivel drive from the position of rest into a loading position, in which the loading platform is swivelled from a position of rest on the unloading surface into the loading position parallel to the floor,
characterised in that in the position of rest in swung-in state the loading platform (1) in connection with an undercarriage (4) is arranged on connecting parts (8) parallel to the parts (4,8), and that on swinging out into the loading position firstly the connecting parts (8) including the loading platform (1) and undercarriage (4) are swivelled on a bearing shaft (3) and further the undercarriage (4) with the loading platform (1) is swung out from the connecting parts (8) about a rotation axis (21), which runs parallel to the bearing shaft (3), onto the floor, in which the loading platform (1) rests so as to be able to be raised and lowered by means of a scissor-like lifting device (5) of the undercarriage (4).

2. A loading device according to Claim 1,
characterised in that the connecting parts (8) are arranged so as to be movable along the bearing shaft (3) in the travelling direction via a displacement drive (6), in which at the same time the loading platform (1) and the undercarriage (4) are displaced in longitudinal direction on the unloading surface.

3. A loading device according to Claims 1 and 2,
characterised in that the displacement drive (6) is arranged in the undercarriage (4) and is effective via driven support rollers (17) lying on the path of travel.

4. A loading device according to Claim 1,
characterised in that the connecting parts (8) are constructed so as to be changeable in length.

5. A loading device according to Claim 1,
characterised in that the undercarriage (4), the loading platform (1) and the connecting parts (8) are able to be swung in beneath the loading surface (2).

6. A loading device according to Claim 1,
characterised in that the undercarriage (4), the loading platform (1) and the connecting parts (8) are able to be swung up through approximately 180 °, in order to form a part of the edge wall (9) of the loading surface (2).

7. A loading device according to Claim 1,
characterised in that the connecting parts (8), which are displaceable on the bearing shaft (3), are coupled with a swivel drive (10), in which the connecting parts (8) are swivel led with the undercarriage (4) and the loading platform (1).

8. A loading device according to one or more of the preceding Claims, characterised in that the bearing shaft (3) and the connecting parts (8) are arranged or are movable beneath the loading surface (2) and inside the folded-down edge wall (9).

## Revendications

1. Dispositif de chargement pour camions ou pour rampes de chargement fixes, comportant une plate-forme de chargement (1) qui est apte à pivoter à l'aide d'un mécanisme de pivotement pour passer de la position de repos à une position de chargement, la plate-forme de chargement passant ainsi d'une position de repos au niveau de la surface de déchargement à la position de chargement parallèle au sol, caractérisé en ce que la plate-forme de chargement (1), rentrée en position de repos et reliée à un châssis (4) au niveau d'éléments de liaison (8), est parallèle aux éléments (4, 8), et en ce que lors du déploiement vers la position de chargement, les éléments de liaison (8) pivotent tout d'abord, avec la plate-forme de chargement (1) et le châssis (4), au niveau d'un arbre de montage (3) et le châssis (4), avec la plate-forme (1), est déployé sur le sol par les éléments de liaison (8) qui le font pivoter sur un axe de rotation (21) parallèle à l'arbre (3), étant précisé que la plate-forme de chargement (1), apte à être soulevée et abaissée à l'aide d'un dispositif de levage en forme de ciseaux (5), est soutenue par le châssis (4).

2. Dispositif de chargement selon la revendication 1, caractérisé en ce que les éléments de liaison (8) sont disposés mobiles le long de l'arbre de montage (3), dans le sens de marche, par l'intermédiaire d'un mécanisme de déplacement (6), étant précisé que la plate-forme (1) et le châssis (4) sont en même temps déplacés dans le sens longitudinal au niveau de la surface de déchargement.

3. Dispositif de chargement selon les revendications 1 et 2, caractérisé en ce que le mécanisme de déplacement (6) est disposé dans le châssis (4) et agit par l'intermédiaire de galets d'appui (7) entraînés, posés sur la chaussée.

4. Dispositif de chargement selon la revendication 1, caractérisé en ce que les éléments de liaison (8) sont dotés d'une longueur variable.

5. Dispositif de chargement selon la revendication 1, caractérisé en ce que le châssis (4), la plate-forme de chargement (1) et les éléments de liaison (8) sont aptes à être amenés par pivotement sous la surface de chargement (2).

6. Dispositif de chargement selon la revendication 1, caractérisé en ce que le châssis (4), la plate-forme de chargement (1) et les éléments de liaison (8) sont aptes à être relevés par pivotement d'environ 180° afin de former une partie de la paroi latérale (9) de la surface de chargement (2).

7. Dispositif de chargement selon la revendication 1, caractérisé en ce que les éléments de liaison (8) mobiles au niveau de l'arbre de montage (3) sont accouplés à un mécanisme de pivotement (10), lesdits éléments de liaison (8) pivotant avec le châssis (4) et la plate-forme de chargement (1).

8. Dispositif de chargement selon l'une au moins des revendications précédentes, caractérisé en ce que l'arbre de montage (3) et les éléments de liaison (8) sont disposés et mobiles au-dessous de la surface de chargement (2) et à l'intérieur de la paroi latérale (9) abaissée.
